(19) Europäisches Patentamt
European Patent Office
Office européen des brevets

(11) **EP 2 580 564 B1**

(12) **EUROPÄISCHE PATENTSCHRIFT**

(45) Veröffentlichungstag und Bekanntmachung des Hinweises auf die Patenterteilung:
**27.08.2014 Patentblatt 2014/35**

(51) Int Cl.:
***G01L 1/04*** *(2006.01)*     ***G01L 19/14*** *(2006.01)*
***G01L 9/00*** *(2006.01)*

(21) Anmeldenummer: **11718756.7**

(22) Anmeldetag: **11.05.2011**

(86) Internationale Anmeldenummer:
**PCT/EP2011/057591**

(87) Internationale Veröffentlichungsnummer:
**WO 2011/154209 (15.12.2011 Gazette 2011/50)**

(54) **DRUCKSENSOR MIT EINER ZYLINDRISCHEN DRUCKMESSZELLE**

PRESSURE SENSOR WITH A CYLINDRICAL PRESSURE MEASUREMENT CELL

CAPTEUR DE PRESSION À CELLULE DE MESURE DE PRESSION CYLINDRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.06.2010 DE 102010029955**

(43) Veröffentlichungstag der Anmeldung:
**17.04.2013 Patentblatt 2013/16**

(73) Patentinhaber: **Endress+Hauser GmbH+Co. KG**
**79689 Maulburg (DE)**

(72) Erfinder: **HÜGEL, Michael**
**79541 Lörrach (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
**EP-A1- 0 594 808**     **EP-A2- 1 942 325**
**WO-A1-2010/046249**     **DE-A1- 10 133 066**

**Beschreibung**

Die vorliegende Erfindung betrifft einen Druckmessaufnehmer mit einer zylindrischen Druckmesszelle. Gattungsgemäße Druckmessaufnehmer weisen eine keramische Druckmesszelle in einem Gehäuse auf, wobei die Druckmesszelle in einer Messzellenkammer in dem Gehäuse angeordnet ist, wobei die Messzellenkammer eine Öffnung aufweist, durch welche die Druckmesszelle mit einem Mediendruck beaufschlagbar ist, wobei das Gehäuse eine sich radial einwärts erstreckende ringförmige Schulter aufweist, welche die Gehäuseöffnung umgibt, und welche eine axiale Anschlagfläche für einen Dichtring bildet, auf welcher ein Dichtring aufliegt, gegen den die Druckmesszelle mit einer Eigenspannvorrichtung axial eingespannt ist. Zur Positionierung der Druckmesszelle und des Dichtrings im Gehäuse werden Winkelringe eingesetzt, welche in einem Ringspalt zwischen der Mantelfläche der Druckmesszelle und der Gehäusewand eingesetzt sind, und welche den Rand der öffnungsseitigen Stirnfläche der Druckmesszelle umgreifen. Ein gattungsgemäßer Druckmessaufnehmer ist beispielsweise im europäischen Patent EP 0 594 808 B1 offenbart, wobei der dort beschriebene Winkelring insbesondere dazu dient, einen modularen Aufbau des Gehäuses zu ermöglichen, bei dem die axiale Schulter an einem Prozessanschlusskörper ausgebildet ist, welcher die Gehäuseöffnung aufweist, durch welche die Druckmesszelle mit einem Druck zu beaufschlagen ist, wobei der Anschlusskörper auf seiner Mantelfläche ein Gewinde aufweist, welches in ein komplementäres Innengewinde in dem Gehäuse eingereift, wobei das Innengewinde in einem frontseitigen Endabschnitt der Sensorkammer angeordnet ist. Die Aufgabe des Winkelrings ist in diesem Zusammenhang zweierlei, nämlich einerseits das axiale und radiale Positionieren der Druckmesszelle in dem Gehäuse und andererseits das Halten des O-Rings vor der Montage des Anschlusskörpers. Insbesondere das Spannungsverhalten der Druckmesszelle in dem Gehäuse setzt jedoch einen hinreichend elastischen Werkstoff für den Winkelring voraus, welches hinsichtlich der radialen Abstützung des Dichtrings durch den Winkelring Kompromisse erfordert, da Dichtring und Winkelring Werkstoffe ähnlicher Härte aufweisen, und insofern der Winkelring kaum zur Abstützung des Dichtrings unter Druckbelastung geeignet erscheint.

Die Offenlegungsschrift EP 1 942 525 A1 offenbart eine Abdichteinrichtung zum Verschließen eines Druckmesszellengehäuses auf einer dem Gehäuse zugewandten Rückseite einer Druckmesszelle, wobei die Abdichteinrichtung eine Druckausgleichsöffnung für eine Druckausgleichsleitung der im Druckmesszellengehäuse aufgenommenen Druckmesszelle aufweist, wobei die Abdichteinrichtung aus einem formstabilen Hartteil mit zumindest einem im Bereich der Druckausgleichsöffnung an dem Hartteil befestigten elastischen Weichteil ausgebildet ist.

Die Offenlegungsschrift WO 2010 046 249 A1 offenbart einen Druckmessaufnehmer mit einem länglichen Gehäuse, einer in dem Gehäuse angeordneten Druckmesszelle, wobei das Gehäuse wenigstens eine Öffnung aufweist, durch die hindurch der Sensor mit einem Druck beaufschlagbar ist, die Druckmesszelle ist in dem Gehäuse gegen eine Dichtung axial eingespannt.

Die Offenlegungsschrift DE 101 33 066 A1 offenbart eine Druckmesszelle die in eine Hülse eingefasst ist, welche eine sich radial nach innen erstreckende Schulter aufweist, auf der die Druckmesszelle aufliegt, wobei zwischen der Schulter und dem Rand der Druckmesszelle ein Zentrierring mit einem zylindrischen Abschnitt und einer daran angeformten sich radial nach innen erstreckende Schulter angeordnet ist. Der Zentrierring bewirkt eine weiche und verspannungsarme Lagerung der Druckmesszelle. Zusätzlich bewirkt der Zentrierring eine Abdichtung des Spaltes zwischen der Druckmesszelle und der Hülse.

Bei kleineren Druckmesszellen ist es jedoch erforderlich, die Position des Dichtrings genau zu definieren, da die relative Bedeutung einer radialen Verschiebung des Dichtrings mit abnehmendem Durchmesser der Druckmesszelle an Bedeutung gewinnt. Es ist daher die Aufgabe der vorliegenden Erfindung, einen Druckmessaufnehmer bereitzustellen, der die Nachteile des Stands der Technik überwindet, also einerseits die Druckmesszelle spannungsfrei in der Messzellenkammer lagert und andererseits den Dichtring auch unter Druckbelastung radial definiert positioniert. Die Aufgabe wird erfindungsgemäß gelöst durch den Druckmessaufnehmer gemäß dem unabhängigen Patentanspruch 1.

Der erfindungsgemäße Druckmessaufnehmer umfasst: eine im wesentlichen zylindrische Druckmesszelle, ein Messzellengehäuse mit einer zumindest abschnittsweise im wesentlichen zylindrischen Messzellenkammer; einen Dichtring; eine Einspannvorrichtung; und einen Winkelring zum positionieren der Druckmesszelle und des Dichtrings in der Messzellenkammer, wobei die Messzellenkammer eine Öffnung aufweist, durch welche die Messzellenkammer mit einem Mediendruck beaufschlagbar ist, wobei das Messzellengehäuse eine ringförmige axiale Anschlagfläche aufweist, welche die Öffnung umgibt, und welche sich von einer zylindrischen Wand der Messzellenkammer radial einwärts erstreckt, wobei der Dichtring auf der axialen Anschlagfläche aufliegt, wobei die Druckmesszelle mit einer frontseitigen Stirnfläche auf den Dichtring aufliegt, wobei die Einspannvorrichtung auf einer rückseitigen Stirnfläche der Druckmesszelle aufliegt, um die Druckmesszelle gegen den Dichtring axial einzuspannen, wobei der Winkelring in einem Ringspalt zwischen der Druckmesszelle und einer Wand der Messzellenkammer angeordnet ist und eine sich radial einwärts erstreckende Schulter aufweist, welche einen Randbereich der frontseitigen Stirnfläche der Druckmesszelle umgreift, wobei die radiale Schulter einen radialen Anschlag definiert, um den Dichtring zwischen der Druckmesszelle und der axialen Anschlagfläche zu positionieren, wobei erfindungsgemäß der Winkelring mindestens eine erste Komponente umfasst, die einen formsteifen Werkstoff aufweist, und mindestens eine zweite Komponente, welche einen elastischen Werkstoff aufweist, wobei die mindestens eine formsteife Komponente die radiale Schulter bildet und sich in axialer Richtung in den Ringspalt erstreckt, wobei die zweite Komponente mit der ersten Komponente verbunden ist und sich in dem Ringspalt zumindest abschnittsweise radial zwischen der Mantelfläche der Druckmesszelle und der Wand der Messzellenkammer erstreckt, um die Druckmesszelle bezüglich der Messzellenkammer zu positionieren, wobei der zylindrische Abschnitt einen oder mehrere Durchbrüche aufweist, durch welche sich die zweite Komponente erstreckt, um die zweite Komponente mit der ersten Komponente zu verbinden.

In einer Weiterbildung der Erfindung weist die erste Komponente einen im Wesentlichen zylindrischen Abschnitt auf, von dem sich an einem Endabschnitt die radiale Schulter radial einwärts erstreckt.

In einer Ausgestaltung der Erfindung umfassen die Durchbrüche, Bohrungen oder axiale Schlitze in dem zylindrischen Abschnitt.

In einer Weiterbildung der Erfindung umfasst die zweite Komponente ein Elastomer mit einer Härte von nicht mehr als 50 Shore A. Das Elastomer kann insbesondere VMQ oder EPDM aufweisen.

In einer Weiterbildung der Erfindung weist die erste Komponente einen organischen Werkstoff, insbesondere ein Elastomer auf. Das Polymer der ersten Komponente kann insbesondere PEEK, PS oder PA xx aufweisen, insbesondere PA 6, PA 66, PA 12, PA MACM12, PA 6-3-T.

Die Druckmesszelle kann insbesondere eine keramische Druckmesszelle sein, welche einen Grundkörper und eine Messmembran aufweist, wobei die Messmembran entlang ihres Randes mittels einer ringförmigen Fügestelle druckdicht mit dem Grundkörper verbunden ist, wobei der Dichtring in dem mit der Fügestelle fluchtenden Bereich der Messmembran auf der Messmembran aufliegt. Der Dichtring kann insbesondere ein Elastomer aufweisen.

Die Einspannvorrichtung kann gemäß einer Weiterbildung der Erfindung einen Schraubring umfassen, welcher auf seiner Mantelfläche ein Gewinde aufweist, und wobei das Gehäuse ein zu dem Gewinde des Schraubrings komplementäres Innengewinde aufweist, in welches der Schraubring eingeschraubt ist, um die Druckmesszelle einzuspannen.

Gemäß einer Weiterbildung der Erfindung ist zwischen dem Schraubring und der Druckmesszelle mindestens ein Entkopplungskörper angeordnet. Der Entkopplungskörper dient insbesondere dazu Radialspannungen aufgrund unterschiedlicher Wärmeausdehnungskoeffizienten des Materials des Schraubrings einerseits und des Materials der Druckmesszelle andererseits, de über Reibschluss in die Druckmesszelle eingeleitet werden könnten, von der Druckmesszelle fernzuhalten.

In einer derzeit bevorzugten Ausgestaltung der Erfindung weist der Entkopplungskörper den gleichen Werkstoff auf wie die Druckmesszelle bzw. wie der Grundkörper der Druckmesszelle.

Gemäß einer Weiterbildung der Erfindung umfasst die zweite Komponente des Winkelrings mehrere Federelemente, die in dem Ringspalt zur Positionierung der Druckmesszelle angeordnet sind.

In einer Weiterbildung der Erfindung füllt der zylindrische Abschnitt des ersten Elements nicht mehr als 70 % vorzugsweise nicht mehr als 50% des Volumens des Ringspalts zwischen der Druckmesszelle und der Wand der Messzellenkammer aus, wobei die Federelemente nicht mehr als 80 %, vorzugsweise nicht mehr als 60 % und besonders bevorzugt nicht mehr als 50 % des verbleibenden Volumen des Ringspalts ausfüllen. Das verbleibende Volumen des Ringspalts ist die Differenz zwischen dem Gesamtvolumen des Ringspalts und dem Volumen des zylindrischen Abschnitts des ersten Elements in dem Ringspalt.

Die Federelemente umfassen in einer Ausgestaltung der Erfindung, Stege, welche sich in axialer Richtung erstrecken.

In einer Ausgestaltung der Erfindung weist der radiale Anschlag für den Dichtring eine toroidale Anlagefläche für den Dichtring aufweist.

Durch die Kontrolle der lateralen Position der Druckmesszelle dient der Winkelring weiterhin dem Ziel die Spannungsfestigkeit von beispielsweise 600V zwischen der Schaltungsmasse der Druckmesszelle und der Masse des Gehäuses (Erde) zu gewährleisten. Insbesondere eine metallische Fügestelle zwischen der Messmembran und dem Grundkörper der Druckmesszelle, die sich bis zur Mantelfläche der Druckmesszelle erstreckt, ist auf Schaltungsmasse der Druckmesszelle gelegt. Insofern ist es wichtig, die Mindestabstände zwischen der Mantelfläche der Druckmesszelle und dem Gehäuse einzuhalten, was durch den Winkelring erreicht wird.

Die Erfindung wird nun anhand der in den Figuren gezeigten Ausführungsbeispiele erläutert. Es zeigt:

Fig. 1: einen Längsschnitt durch einen Abschnitt eines erfindungsgemäßen Druckmessaufnehmers;

Fig. 2: ein Ausführungsbeispiel eines Winkelrings eines erfindungsgemäßen Druckmessaufnehmers;

Fig. 3: die erste Komponente des Winkelrings aus Fig. 2; und

Fig. 4: die zweite Komponente des Winkelrings aus Fig. 2.

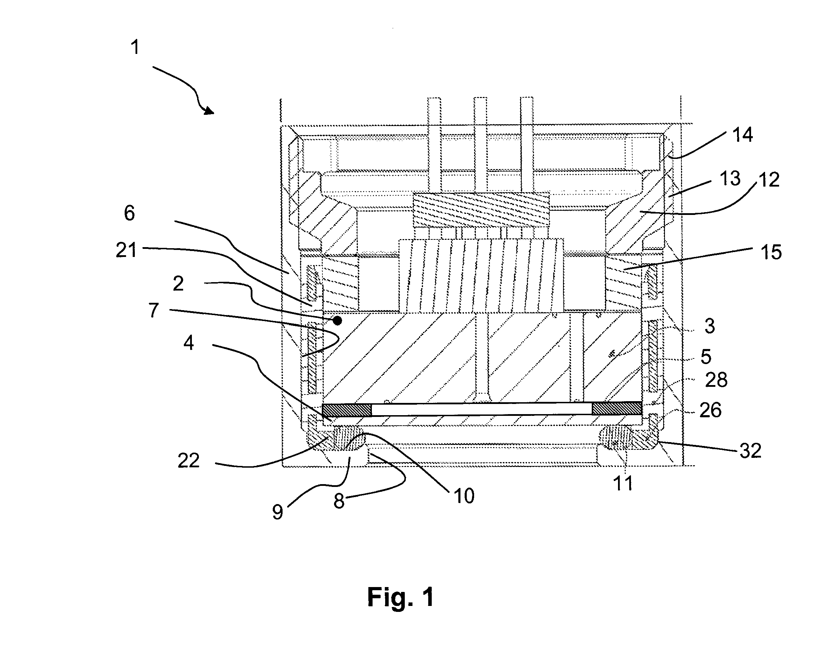

Der in Fig. 1 dargestellte Druckmessaufnehmer 1 umfasst eine Druckmesszelle 2, welche einen zylindrischen Grundkörper 3 und eine Messmembran 4 aufweist, wobei die Messmembran mit dem Grundkörper entlang einer umlaufenden ringförmigen Fügestelle 5 druckdicht verbunden ist. Die Messmembran und der Grundkörper weisen vorzugsweise einen keramischen Werkstoff, insbesondere Korund auf, wobei die Fügestelle beispielsweise ein Aktivhartlot, insbesondere ein Zr-Ni-Ti-Aktivhartlot oder Glas umfassen kann.

Die Druckmesszelle ist in einem Gehäuse 6 angeordnet, welches in seinem Inneren eine zylindrische Messzellenkammer 7 aufweist, die durch eine stirnseitige Öffnung 8 mit einem Druck beaufschlagbar ist, wobei die stirnseitige Öffnung 8 durch eine radiale Schulter 9 begrenzt ist, welche sich von der zylindrischen Wand der Messzellenkammer 7 radial einwärts erstreckt. Die radiale Schulter 9 definiert einen axialen Anschlag 10, an dem sich ein elastischer Dichtring, insbesondere ein O-Ring 11 abstützt. Die Druckmesszelle 2 ist zwischen dem Dichtring 11 und einem Einspannring 12 axial in der Messzellenkammer eingespannt, wobei der Einspannring 12 auf einem Abschnitt seiner Mantelfläche ein Außengewinde 13 aufweist, welches in ein komplementäres Innengewinde 14 im Gehäuse 6 eingreift. Zwischen dem Einspannring 12 und der Druckmesszelle ist ein Entkopplungsring 15 angeordnet und eingespannt, wobei der Entkopplungsring 15 insbesondere den gleichen Werkstoff wie der Grundkörper der Grundmesszelle 2 aufweist. Zur Positionierung der Druckmesszelle 2 in der Messzellenkammer 7 ist ein Winkelring 20 vorgesehen, welcher einen zylindrischen Abschnitt 21 und eine radiale Schulter 22 aufweist, wobei durch die radiale Schulter 22 an einer Stirnseite des zylindrischen Abschnitts 21 radial einwärts erstreckt. Der Winkelring ist in einem Ringspalt angeordnet, welcher zwischen der Druckmesszelle 2 und der Wand der Messzellenkammer 7 gebildet ist, wobei der Winkelring mit seiner radialen Schulter 22 den Randbereich der Messmembran 4 umgreift. Die radiale Schulter 22 weist eine Anlagefläche 24 auf, an welcher sich der Dichtring 11 radial abstützt. Der Winkelring 20 umfasst eine erste Komponente 26, die ein unter den auftretenden Kräften im Wesentlichen formstabiles Elastomer aufweist, und eine zweite Komponente 28, welches ein deutlich weicheres Elastomer aufweist, wobei die erste Komponente eine Grundstruktur eines Winkelrings bildet, an welcher die zweite Komponente befestigt ist.

Die radialen Schulter 22 dient zur Abstützung des Dichtrings, wobei sich die radiale Schulter zwischen der Anlagefläche 24 für den Dichtring 11 und einem Mantelflächenabschnitt 32 der ersten Komponente erstreckt, wobei der Mantelflächenabschnitt in Spielpassung in dem Gehäuse positioniert ist und somit die Position des Dichtrings bezüglich des Gehäuses hinreichend genau definiert, wobei der Dichtring in dieser Position auch unter Druckbeaufschlagung durch die radiale Schulter 22 an der Anlagefläche 24 radial abgestützt wird.

Für die Toleranz des Durchmessers d des Winkelrings im Bereich der Spielpassung gilt:

$$d_0 - 0{,}05 \text{ mm} < d < d_0 + 0{,}15 \text{ mm},$$

wobei $d_0$ der Solldurchmesser ist. Die Toleranzen des Spalts betragen dementsprechend den halben Wert der Durchmessertoleranz.

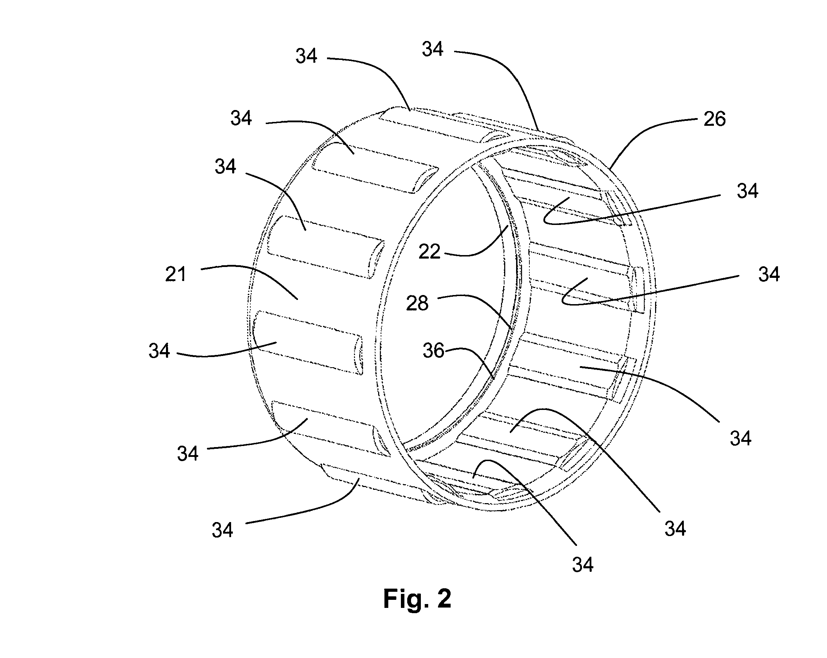

Das in Fig. 2 dargestellte Ausführungsbeispiel eines Winkelrings 20 weist einen zylindrischen Abschnitt 21 und eine radiale Schulter 22 auf, wobei der Winkelring in eine erste Komponente 26 auf seinem vergleichsweise harten Elastomer und eine zweite Komponente 28 aus einem vergleichsweise weichen Elastomer aufweist. Die erste Komponente 26 definiert eine zylindrische Grundstruktur und eine radiale Schulter 22 bis zu deren radialer Anlagefläche 24, wobei die zweite Komponente 28 axiale Stege 24 umfasst, welche Durchbrüche der ersten Komponente 26 durchdringen, und wobei die axialen Stege 34 über einen Ring 36 miteinander verbunden sind, welcher einen Teil der radialen Schulter 22 bildet.

Die Druckmesszelle wird in diesen Winkelring eingesetzt, wobei die laterale Position der Druckmesszelle in der Messzellenkammer des Gehäuses durch die Stege 34 definiert ist, wobei die Stege 34 wiederum an der Gehäusewand der Messzellenkammer anliegen.

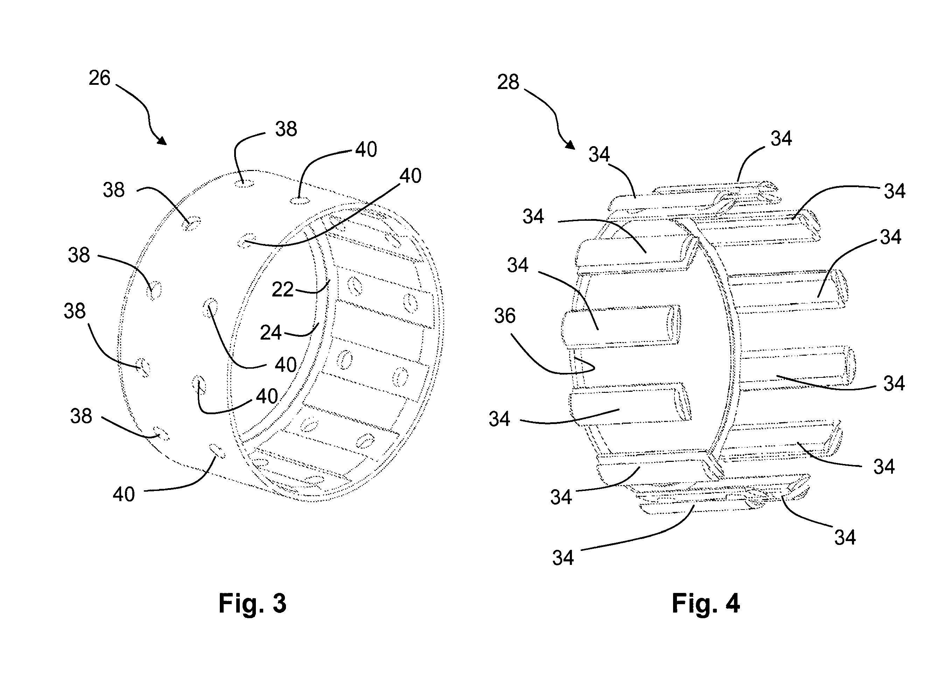

Fig. 3 zeigt nun eine Einzeldarstellung der ersten Komponente 26 des Winkelrings, wobei hierin Bohrungen 28 und 40 zu erkennen sind, welche die Durchbrüche bilden, durch welche sich die Stege 34 in radialer Richtung erstrecken, um diese bezüglich der ersten Komponente zu fixieren.

Fig. 4 zeigt schließlich eine Einzeldarstellung der zweiten Komponente des erfindungsgemäßen Winkelrings, wobei die Stege 34 über eine umlaufenden Ring 36 miteinander verbunden sind. Der Winkelring wird hergestellt, indem die erste Komponente in einem Spritzgussverfahren mit dem Material der zweiten Komponente umspritzt wird.

Im Ergebnis offenbart die vorliegende Erfindung einen Druckmessaufnehmer mit einer verbesserten Positionierung des Dichtrings im Gehäuse, was die Voraussetzung für eine gleich bleibende Messgenauigkeit bei verkleinerten Messzellen ist.

**Patentansprüche**

1. Druckmessaufnehmer (1) umfassend:

   eine im Wesentlichen zylindrische Druckmesszelle (2), ein Messzellengehäuse (6) mit einer im Wesentlichen zylindrischen Messzellenkammer (7), wobei die Messzellenkammer eine Öffnung aufweist, durch welche die Messzellenkammer mit einem Mediendruck beaufschlagbar ist, wobei das Messzellengehäuse (6) eine ringförmige axiale Anschlagfläche (10) aufweist, welche die Öffnung umgibt, und welche sich von einer zylindrischen Wand der Messzellenkammer radial einwärts erstreckt;

einen Dichtring (11);

eine Einspannvorrichtung (12); und

einen Winkelring (20) zum Positionieren der Druckmesszelle (2) und des Dichtrings (11) in der Messzellenkammer,

wobei der Dichtring (11) auf der axialen Anschlagfläche (10) aufliegt, wobei die Druckmesszelle (2) mit ihrer frontseitigen Stirnfläche auf den Dichtring (11) aufliegt,

wobei die Einspannvorrichtung (12) auf der rückseitigen Stirnfläche der Druckmesszelle aufliegt, um die Druckmesszelle gegen den Dichtring (11) axial einzuspannen,

wobei der Winkelring (20) in einem Ringspalt zwischen der Druckmesszelle (2) und einer Wand der Messzellenkammer (7) angeordnet ist und eine sich radial einwärts erstreckende Schulter (22) aufweist, welche einen Randbereich der frontseitigen Stirnfläche der Druckmesszelle (2) umgreift,

wobei die radiale Schulter (22) einen radialen Anschlag definiert, um den Dichtring zwischen der Druckmesszelle und der axialen Anschlagfläche zu positionieren,

der Winkelring (20) mindestens eine erste Komponente (26) umfasst, die einen formsteifen Werkstoff aufweist, und mindestens eine zweite Komponente (28), welche einen elastischen Werkstoff aufweist, wobei die mindestens eine erste Komponente die radiale Schulter (22) bildet und sich in axialer Richtung in den Ringspalt erstreckt,

wobei die erste Komponente (26) einen im Wesentlichen zylindrischen Abschnitt aufweist, von dem sich an einem Endabschnitt die radiale Schulter (22) radial einwärts erstreckt,

wobei die zweite Komponente (28) mit der ersten Komponente verbunden ist und sich in dem Ringspalt zumindest abschnittsweise radial zwischen der Mantelfläche der Druckmesszelle (2) und der Wand der Messzellenkammer (7) erstreckt, um die Druckmesszelle (2) bezüglich der Messzellenkammer (7) zu positionieren, **dadurch gekennzeichnet, dass** der zylindrische Abschnitt einen oder mehrere Durchbrüche (38, 40) aufweist, durch welche sich die zweite Komponente erstreckt (28), um die zweite Komponente (28) mit der ersten Komponente (26) zu verbinden.

2. Druckmessaufnehmer (1) nach Anspruch 1, wobei die Durchbrüche, Bohrungen (38, 40) oder axiale Schlitze in dem zylindrischen Abschnitt umfassen.

3. Druckmessaufnehmer (1) nach einem der vorhergehenden Ansprüche, wobei die zweite Komponente (28) ein Elastomer mit einer Härte von nicht mehr als 50 Shore A aufweist.

4. Druckmessaufnehmer (1) nach einem der vorhergehenden Ansprüche, wobei das Elastomer der zweiten Komponente (28) VMQ oder EPDM aufweist.

5. Druckmessaufnehmer (1) nach einem der vorhergehenden Ansprüche, wobei die erste Komponente (26) einen organischen Werkstoff, insbesondere ein Elastomer, bevorzugt PEEK, PS oder PAxx aufweist.

6. Druckmessaufnehmer (1) nach einem der vorhergehenden Ansprüche, wobei die Druckmesszelle (2) eine keramische Druckmesszelle ist, welche einen Grundkörper (3) und eine Messmembran (4) aufweist, wobei die Messmembran (4) entlang ihres Randes mittels einer ringförmigen Fügestelle (5) druckdicht mit dem Grundkörper (2) verbunden ist, wobei der Dichtring (11) in dem mit der Fügestelle (5) fluchtenden Bereich der Messmembran (4) auf der Messmembran aufliegt.

7. Druckmessaufnehmer (1) nach Anspruch 6, wobei der Dichtring (11) ein Elastomer aufweist.

8. Druckmessaufnehmer (1) nach einem der vorhergehenden Ansprüche, wobei die Einspannvorrichtung einen Schraubring umfasst, welcher auf seiner Mantelfläche ein Gewinde aufweist, und wobei das Gehäuse ein zu dem Gewinde des Schraubrings komplementäres Innengewinde aufweist, in welches der Schraubring eingeschraubt ist, um die Druckmesszelle einzuspannen.

9. Druckmessaufnehmer (1) nach Anspruch 10, wobei zwischen dem Schraubring und der Druckmesszelle mindestens ein Entkopplungskörper angeordnet ist.

10. Druckmessaufnehmer (1) nach einem der vorhergehenden Ansprüche, wobei die zweite Komponente (28) mehrere Federelemente (34) umfasst, die in dem Ringspalt zur Positionierung der Druckmesszelle angeordnet sind.

11. Druckmessaufnehmer (1) nach Anspruch 12, wobei der zylindrische Abschnitt der ersten Komponente nicht mehr als 70 % vorzugsweise nicht mehr als 50% des Volumens des Ringspalts zwischen der Druckmesszelle und der Wand der Messzellenkammer (7) ausfüllt, und wobei die Federelemente (34) nicht mehr als 80 %, vorzugsweise nicht mehr als 60 % und besonders bevorzugt nicht mehr als 50 % des verbleibenden Volumen des Ringspalts ausfüllen.

**12.** Druckmessaufnehmer (1) nach Anspruch 10 oder 11, wobei die Federelemente Stege (34) aufweisen, welche sich in axialer Richtung erstrecken.

**13.** Druckmessaufnehmer (1) nach einem der vorhergehenden Ansprüche, wobei der radiale Anschlag für den Dichtring (11) eine toroidale Anlagefläche für den Dichtring (11) aufweist.

**Claims**

**1.** Pressure sensor (1) comprising:

an essentially cylindrical pressure measuring cell (2),
a measuring cell housing (6) with an essentially cylindrical measuring cell chamber (7),
wherein the measuring cell chamber has an opening through which the measuring cell chamber can be exposed to a medium pressure,
wherein the measuring cell housing (6) has an annular axial stop face (10) which surrounds the opening and which extends radially inwards from a cylindrical wall of the measuring cell chamber;
a sealing ring (11);
a clamping device (12); and
an angle ring (20) designed to position the pressure measuring cell (2) and the sealing ring (11) in the measuring cell chamber,
wherein the sealing ring (11) lies on the axial stop face (10),
wherein the pressure measuring cell (2) lies with its front abutting face on the sealing ring (11),
wherein the clamping device (12) lies on the rear abutting face of the pressure measuring cell in order to axially clamp the pressure measuring cell against the sealing ring (11),
wherein the angle ring (20) is arranged in an angular gap between the pressure measuring cell (2) and a wall of the measuring cell chamber (7) and features a shoulder (22) that extends radially inwards, said shoulder surrounding a marginal zone of the front abutting face of the pressure measuring cell (2),
wherein the radial shoulder (22) defines a radial stop in order to position the sealing ring between the pressure measuring cell and the axial stop face,
wherein the angle ring (20) comprises at least a first component (26), which features a rigid material, and at least a second component (28), which features an elastic material, wherein the at least first component forms the radial shoulder (22) and extends into the annular gap in the axial direction,
wherein the first component (26) features an essentially cylindrical section from which the radial shoulder (22) extends radially inwards at an end section,
wherein the second component (28) is connected to the first component and in the annular gap extends radially at least in part between the lateral surface of the pressure measuring cell (2) and the wall of the measuring cell chamber (7) in order to position the pressure measuring cell (2) in relation to the measuring cell chamber (7), **characterized in that** the cylindrical section features at least one or several apertures (38, 40) through which the second component extends (28) in order to connect the second component (28) with the first component (26).

**2.** Pressure sensor (1) as claimed in Claim 1, wherein the apertures comprise bore holes (38, 40) or axial slits in the cylindrical section.

**3.** Pressure sensor (1) as claimed in one of the previous claims, wherein the second component (28) features an elastomer with a hardness of no more than 50 Shore A.

**4.** Pressure sensor (1) as claimed in one of the previous claims, wherein the elastomer of the second component (28) features VMQ or EPDM.

**5.** Pressure sensor (1) as claimed in one of the previous claims, wherein the first component (26) features an organic material, particularly an elastomer, preferably PEEK, PS or PAxx.

**6.** Pressure sensor (1) as claimed in one of the previous claims, wherein the pressure measuring cell (2) is a ceramic pressure measuring cell which has a meter body (3) and a measuring membrane (4), wherein the measuring membrane (4) is connected pressure-tight to the meter body (2) along its edge by means of an annular joint (5), wherein the sealing ring (11) lies on the measuring membrane in the area of the measuring membrane that is flush with the joint (5).

**7.** Pressure sensor (1) as claimed in Claim 6, wherein the sealing ring (11) features an elastomer.

**8.** Pressure sensor (1) as claimed in one of the previous claims, wherein the clamping unit comprises a screwed ring which has a thread on its lateral surface, and wherein the housing features an internal thread, complementing the thread of the screwed ring, into which the screwed ring is screwed in order to clamp the pressure measuring cell.

**9.** Pressure sensor (1) as claimed in Claim 10, wherein at least one decoupling body is arranged between the screwed ring and the pressure measuring cell.

**10.** Pressure sensor (1) as claimed in one of the previous claims, wherein the second component (28) comprises several spring elements (34) which are arranged in the annular gap to position the pressure measuring cell.

**11.** Pressure sensor (1) as claimed in Claim 12, wherein the cylindrical section of the first component fills no more than 70%, and preferably no more than 50%, of the volume of the annular gap between the pressure measuring cell and the wall of the measuring cell chamber (7), and wherein the spring elements (34) fill no more than 80%, preferably no more than 60% and particularly preferably no more than 50% of the remaining volume of the annular gap.

**12.** Pressure sensor (1) as claimed in Claim 10 or 11, wherein the spring elements feature ridges (34) that extend in the axial direction.

**13.** Pressure sensor (1) as claimed in one of the previous claims, wherein the radial stop for the sealing ring (11) features a toroidal bearing surface for the sealing ring (11).

**Revendications**

**1.** Capteur de pression (1) comprenant :

une cellule de mesure de pression (2) pour l'essentiel cylindrique,
un boîtier de cellule de mesure (6) avec une chambre de cellule de mesure (7) pour l'essentiel cylindrique, la chambre de cellule de mesure (7) présentant une ouverture, à travers laquelle la chambre de cellule de mesure peut être alimentée avec une pression de fluide, le boîtier de la cellule de mesure (6) présentant une surface de butée (10) axiale annulaire, laquelle entoure l'ouverture, et laquelle s'étend radialement vers l'intérieur à partir d'une paroi cylindrique de la chambre de cellule de mesure ;
une bague d'étanchéité (11) ;
un dispositif de serrage (12) ; et
une bague de butée (20) destinée au positionnement de la cellule de mesure de pression (2) et de la bague d'étanchéité (11) dans la chambre de cellule de mesure,
pour lequel la bague d'étanchéité (11) repose sur la surface de butée axiale (10),
pour lequel la cellule de mesure de pression (2) repose avec sa surface de contact avant sur la bague d'étanchéité (11),
pour lequel le dispositif de serrage (12) repose sur la surface de contact arrière de la cellule de mesure de pression, afin de serrer axialement la cellule de mesure de pression contre la bague d'étanchéité (11),
pour lequel la bague de butée (20) est disposée dans une fente annulaire entre la cellule de mesure de pression (2) et une paroi de la chambre de cellule de mesure (7) et
présente un épaulement (22) s'étendant radialement vers l'intérieur, lequel enveloppe une zone marginale de la surface de contact avant de la cellule de mesure de pression (2),
pour lequel l'épaulement radial (22) définit une butée radiale, afin de positionner la bague d'étanchéité entre la cellule de mesure de pression et la surface de butée axiale,
pour lequel la bague de butée (20) comprend au moins un premier composant (26), constitué d'un matériau indéformable, et au moins un deuxième composant (28), constitué d'un matériau élastique, l'au moins un premier composant formant l'épaulement (22) radial et s'étendant en direction axiale dans la fente annulaire,
pour lequel le premier composant (26) présente une partie essentiellement cylindrique, à partir de laquelle s'étend radialement vers l'intérieur l'épaulement radial au niveau d'une partie d'extrémité,
pour lequel le deuxième composant (28) est relié avec le premier composant et s'étend dans la fente annulaire au moins partiellement radialement entre la surface latérale de la cellule de mesure de pression (2) et la paroi de la chambre de cellule de mesure (7), afin de positionner la cellule de mesure de pression (2) par rapport à la chambre de cellule de mesure (7),
**caractérisé en ce que** la partie cylindrique présente une ou plusieurs ouvertures (38, 40), à travers lesquelles le deuxième composant (28) s'étend, afin de relier le premier composant (26) avec le premier composant (28).

**2.** Capteur de pression (1) selon la revendication 1, pour lequel les ouvertures comportent dans la partie cylindrique des alésages (38, 40) ou des fentes axiales.

**3.** Capteur de pression (1) selon l'une des revendications précédentes, pour lequel le deuxième composant (28) présente un élastomère d'une dureté inférieure à 50 Shore A.

**4.** Capteur de pression (1) selon l'une des revendications précédentes, pour lequel l'élastomère du deuxième composant (28) est constitué de VMQ ou d'EPDM.

**5.** Capteur de pression (1) selon l'une des revendications précédentes, pour lequel le premier composant (26) est constitué d'un matériau organique, notamment d'un élastomère, de préférence en PEEK, PS ou PAxx.

**6.** Capteur de pression (1) selon l'une des revendications précédentes, pour lequel la cellule de mesure de pression (2) est une cellule de mesure de pression céramique, laquelle présente un corps de base (3) et une membrane de mesure (4), la membrane de mesure (4) étant reliée de façon étanche à la pression avec le corps de base (2), le long de son bord au moyen d'un point de jonction (5), la bague d'étanchéité (11) reposant sur la membrane de mesure (4), dans la zone de la membrane de mesure affleurant le point de jonction (5).

**7.** Capteur de pression (1) selon la revendication 6, pour lequel la bague d'étanchéité (11) est constituée d'un élastomère.

**8.** Capteur de pression (1) selon l'une des revendications précédentes, pour lequel le dispositif de serrage comprend un anneau fileté, lequel présente sur sa surface latérale un filetage, et pour lequel le boîtier présente un taraudage complémentaire au filetage de l'anneau fileté, taraudage dans lequel l'anneau fileté est vissé, afin de serrer la cellule de mesure de pression.

**9.** Capteur de pression (1) selon la revendication 10, pour lequel est disposé, entre l'anneau fileté et la cellule de mesure de pression au moins un corps de découplage.

**10.** Capteur de pression (1) selon l'une des revendications précédentes, pour lequel le deuxième composant (28) comporte plusieurs éléments élastiques (34), lesquels sont disposés dans la fente annulaire pour le positionnement de la cellule de mesure de pression.

**11.** Capteur de pression (1) selon la revendication 12, pour lequel la partie cylindrique du premier composant ne remplit pas plus de 70 %, de préférence pas plus de 50 % du volume de la fente annulaire entre la cellule de mesure de pression et la paroi de la chambre de cellule de mesure (7), et pour lequel les éléments élastiques (34) ne remplissent pas plus de 80 %, de préférence pas plus de 60 % et particulièrement de préférence pas plus de 50 % du volume restant de la fente annulaire.

**12.** Capteur de pression (1) selon la revendication 10 ou 11, pour lequel les éléments élastiques présentent des nervures (34), qui s'étendent en direction axiale.

**13.** Capteur de pression (1) selon l'une des revendications précédentes, pour lequel la butée axiale pour la bague d'étanchéité (11) présente une surface d'appui toroïdale pour la bague d'étanchéité (11).

EP 2 580 564 B1

**Fig. 1**

**Fig. 2**

**Fig. 4**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0594808 B1
- EP 1942525 A1

- WO 2010046249 A1
- DE 10133066 A1